# EUROPEAN PATENT SPECIFICATION

(11) **EP 2 373 902 B1**
(45) Date of publication and mention of the grant of the patent: **29.05.2013**
(21) Application number: 09768253.8
(22) Date of filing: 02.12.2009
(51) Int. Cl.: F16D 25/08, F16H 57/04, F16H 37/04, F16H 63/30

(54) **DRIVING MECHANISM FOR A VEHICLE**
ANTRIEBSMECHANISMUS FÜR EIN FAHRZEUG
MÉCANISME D'ENTRAÎNEMENT POUR UN VÉHICULE

(30) Priority: 02.12.2008 NL 2002275; 11.12.2008 NL 2002317; 15.09.2009 NL 2003499
(43) Date of publication of application: 12.10.2011
(73) Proprietor: DTI Group B.V., 5653 LD Eindhoven (NL)
(72) Inventor: VAN DRUTEN, Roëll Marie, NL-5658 EG Eindhoven (NL); VROEMEN, Bas Gerard, NL-5642 CP Eindhoven (NL); SERRARENS, Alexander Franciscus Anita, NL-5581 JS Waalre (NL)
(74) Representative: Verhees, Godefridus Josephus Maria
(86) International application number: PCT/NL2009/050732
(87) International publication number: WO 2010/064909

(56) References cited:
- WO-A1-2004/098937
- DE-A1- 19 949 205
- FR-A1- 2 757 590

## Description

### Field of the invention.

The invention relates to a driving mechanism for a vehicle, comprising a drive source, a transmission having an input shaft and an output shaft and provided with a housing, a clutch present between the drive source and transmission and comprising a first clutch portion which is connected to the drive source and a second clutch portion which is connected to the input shaft of the transmission, and a transmission module having an input which is connected to the first clutch portion and an output which is connected to the output shaft of the transmission, which transmission module comprises a brake as well as a connecting gear and a planetary gear set comprising three rotational members of which a first rotational member is connected to the input, a second rotational member is connected to the connection gear which forms the output and a third rotational member is connected to the brake.

The invention more particularly relates to a driving mechanism for a vehicle in which the transmission module is arranged parallel to the clutch and transmission for transmitting power of the engine to the wheels of the vehicle during the change of the transmission ration.

The transmission is here a continuously variable transmission or a plurality of clutch gears. A clutch gearing may be thought of as being a gear reduction unit in which one of the gears can be coupled to the shaft on which it is bearing supported by closing a synchromesh clutch.

The third rotational member of the planetary gear set can be connected to the firm object via the brake. For example the firm object may be understood to mean the housing of the transmission.

### State of the art.

A driving mechanism of this type is known from WO-A-2004/098937. In this known driving mechanism the planetary gear set is in oil connection to the transmission and this transmission is sealed by sealing rings to the brake and a clutch installed between the transmission and the drive source. Strict demands are to be set to these sealing rings to guarantee a proper oil sealing.

### Summary of the invention.

It is an object of the invention to provide a driving mechanism of the type defined in the opening paragraph in which fewer demands are made on the sealings than in the known driving mechanism. To this end the driving mechanism according to the invention is characterised in that the transmission module comprises an insert sleeve which can be connected to or is integral with an operating cylinder for operating the clutch or the housing of the transmission and on which the connecting gear is bearing supported, as well as a housing plate which can be installed against the housing of the transmission or is integral with it, and two sealing rings of which a first sealing ring is accommodated between the housing plate or housing and the connecting gear or a connecting sleeve directly connected thereto and a second sealing ring accommodated between the connecting gear or a connecting sleeve connected to it and the insert sleeve. The transmission module can then be accommodated in the housing of the clutch.

The planetary set of the driving mechanism according to the invention is oil-free while the component parts rotating relative to one another are preferably grease-lubricated and/or provided with a coating. As a result, the planetary set can be simply mounted in the non-oil-lubricated chamber between the transmission and the clutch, so that this planetary set can be integrated well with the flywheel of the drive source and the clutch, which renders possible a compact construction in axial direction. The planetary gear set is then preferably grease lubricated.

An embodiment of the driving mechanism according to the invention is characterised in that the input is formed by a connecting plate which is provided with splines for coupling to the first rotational member of the planetary gear set and which can be connected to or is integrated with the first clutch member.

A further embodiment of the driving mechanism according to the invention is characterised in that the brake comprises actuating means which comprise at least three brake cylinders, brake plungers present in the brake cylinders, and brake lines present among the brake cylinders, which actuating means form a closed hydraulic unit which is separately installed in the housing of the transmission. In consequence, there is no need for the housing of the transmission to be provided with hydraulic channels. Preferably the brake cylinders and brake lines are arranged as one plastic unit.

### Brief description of the drawings.

The invention will be described below in more detail based on an example of embodiment of the transmission module according to the invention represented in the drawing figures, in which:
Fig. 1 shows a schematic diagram of an embodiment of a driving mechanism provided with a transmission module according to the invention;
Fig. 2 gives a cross-sectional representation of a section of the driving mechanism shown in Fig. 1 present between the transmission and the drive source;
Fig. 3 shows a concrete embodiment of the section shown in Fig. 2;
Fig. 4 shows the actuation means of the brake as a closed hydraulic unit;
Fig. 5 shows the brake cylinders and brake lines as one plastic unit; and
Fig. 6 gives a representation of a cross-section of an embodiment in concrete form.

### Detailed description of the drawings.

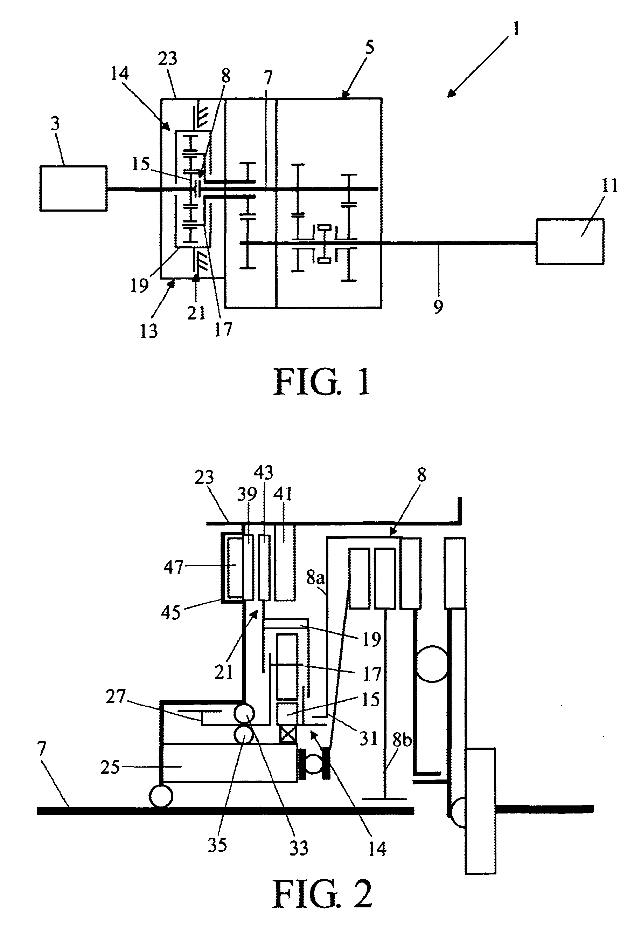

Fig. 1 shows a schematic diagram of an embodiment of a driving mechanism provided with a transmission module according to the invention. The driving mechanism 1 comprises a drive source 3 and an oil-lubricated transmission 5 which is provided with an input shaft 7 which is coupled via a clutch 8 to the drive source, and an output shaft 9 which is connected to driven wheels 11 of a vehicle. The driving mechanism 1 further includes a transmission module 13 which is connected parallel to the transmission 5 to the input and output shaft 7, 9 respectively.

The transmission module 13 has a grease lubricated, planetary gearing 14 with three rotational members of which a first rotational member 15 is connected to the first clutch portion 8a, a second rotational member 17 is coupled to the output shaft 9 and the third rotational member 19 can be connected via a brake 21 to the housing 23 of the transmission.

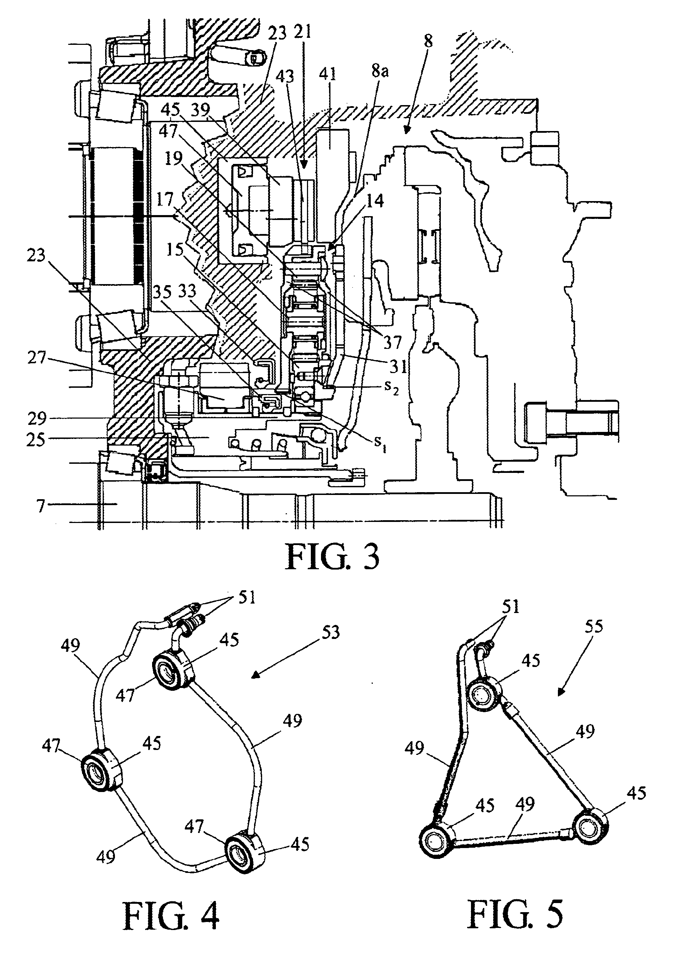

Figs. 2 and 3 give a diagrammatic cross-sectional representation of a section of the driving mechanism shown in Fig. 1 present between the transmission 5 and the drive source 3 and show the section in concrete form, respectively. Around the input shaft 7 of the transmission is concentrially present a hydraulic cylinder 25 for operating the clutch 8 present between the transmission and the drive source. The first rotational member 15, which is formed by a sun gear, and a connecting gear 27, which is connected to the second rotational member 17, which is formed by a planet carrier are bearing-supported on an insert sleeve 29 (see Fig. 3) which is attached to the hydraulic cylinder 25.

The connecting gear 27 is then bearing-mounted on the insert sleeve 29 in axial and radial direction by means of a plain bearing. The connecting gear is connected to the second rotational member 17 via splines s₁ (see Fig. 3). The first rotational member 15 is connected via further splines s₂ to a connecting plate 31 which is attached to a first clutch portion 8a of the clutch. A second clutch portion 8b of the clutch is connected to the input shaft 7 of the transmission 5.

Between the housing 23 of the transmission and the connecting gear 27 is applied a sealing ring 33 and between the connecting gear 27 and the insert sleeve 29 is applied a further sealing ring 35.

The third rotational member 19 is formed by a ring gear which has side guards 37 which provide that the grease remains inside the planetary set of gears.

The brake 21 comprises two interconnected brake plates 39, 41 and a brake disc 43 arranged between them. The first brake plate 39 is actuated by actuation means. The second brake plate 41 is attached to the housing 23.

The actuation means are formed by three brake cylinders 45 accommodated in the housing with movable brake plungers 47 inside the cylinders. The brake cylinders are connected to one another via brake lines 49 and to connecting pieces 51, see Fig. 4. The actuating means form a closed hydraulic unit 53 which is accommodated separately in the housing of the transmission. The brake cylinders as well as the brake lines are arranged as one whole 55 in plastic, see Fig. 5.

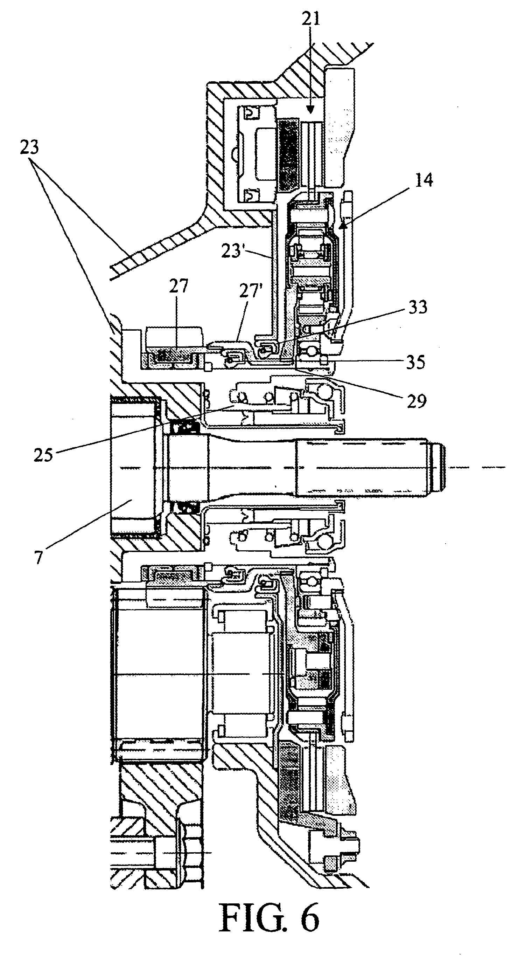

Fig. 6 shows by way of illustration another concrete representation of an embodiment in a cross-sectional view. The housing plate 23' is here a separate plate which is connected to the housing 23 and a connecting sleeve 27' is directly connected to the connecting gear 27, in this embodiment by way of example by means of splines but this may obviously also be effected in a different manner.

Albeit the invention has been described in the foregoing based on the drawings, it should be observed that the invention is not by any manner or means restricted to the embodiment shown in the drawings. The invention also extends to all embodiments deviating from the embodiment shown in the drawings within the scope defined by the claims.

## Claims

1. A driving mechanism (1) for a vehicle, comprising a drive source (3), a transmission (5) having an input shaft (7) and an output shaft (9) and provided with a housing (23), a clutch (8) present between the drive source and transmission and comprising a first clutch portion (8a) which is connected to the drive source and a second clutch portion (8b) which is connected to the input shaft of the transmission, and a transmission module (13) having an input which is connected to the first clutch portion (8a) and an output which is connected to the output shaft (9) of the transmission, which transmission module (13) comprises a brake (21) as well as a connecting gear (27) and a planetary gear set (14) comprising three rotational members of which a first rotational member (15) is connected to the input, a second rotational member (17) is connected to the connection gear which forms the output and a third rotational member (19) is connected to the brake, **characterised in that** the transmission module (13) comprises an insert sleeve (29) which can be connected to or is integral with an operating cylinder (25) for operating the clutch (8) or the housing (23) of the transmission (5) and on which the connecting gear (27) is bearing supported, as well as a housing plate (23') which can be installed against the housing (23) of the transmission or is integral with it, and two sealing rings (33, 35) of which a first sealing ring (33) is accommodated between the housing plate (23') or housing (23) and the connecting gear (27) or a connecting sleeve (27') directly connected thereto and a second sealing ring (35) accommodated between the connecting gear (27) or a connecting sleeve (27') connected to it and the insert sleeve (29).

2. A driving mechanism (1) as claimed in claim 1, **characterised in that** the input is formed by a connecting plate (31) which is provided with splines (s₂) for coupling to the first rotational member (15) of the planetary gear set (14) and which can be connected to or is integrated with the first clutch member (8a).

3. A driving mechanism (1) as claimed in claim 1 or 2, **characterised in that** the brake (21) comprises actuating means which comprise at least three brake cylinders (45), brake plungers (47) present in the brake cylinders, and brake lines (49) present among the brake cylinders, which actuating means form a closed hydraulic unit (53) which is separately installed in the housing (23) of the transmission (5).

4. A driving mechanism (1) as claimed in claim 3, **characterised in that** the brake cylinders (45) and brake lines (49) are arranged as one plastic unit (55).

## Patentansprüche

1. Antrieb (1) für ein Fahrzeug, bestehend aus einer Antriebsquelle (3), aus einem Getriebe (5) mit einer Eingangswelle (7) und einer Ausgangswelle (9), das mit einem Gehäuse (23) versehen ist, aus einer zwischen der Antriebsquelle und dem Getriebe angeordneten Kupplung (8) mit einem ersten Kupplungsteil (8a), das mit der Antriebsquelle verbunden ist, und einem zweiten Kupplungsteil (8b), das mit der Eingangswelle des Getriebes verbunden ist, und aus einem Getriebemodul (13) mit einem Eingang, der mit dem ersten Kupplungsteil (8a) verbunden ist, und einem Ausgang, der mit der Ausgangswelle (9) des Getriebes verbunden ist, wobei das Getriebemodul (13) eine Bremse (21) sowie ein Verbindungszahnrad (27) umfasst, sowie aus einem Planetensatz (14) mit drei Drehkörpern, von denen ein erster Drehkörper (15) mit dem Eingang verbunden ist, ein zweiter Drehkörper (17) mit dem Verbindungszahnrad, das den Ausgang bildet, und ein dritter Drehkörper (19) mit der Bremse, **dadurch gekennzeichnet, dass** das Getriebemodul (13) eine Einsatzhülse (29) umfasst, die mit einem Betätigungszylinder (25) für die Betätigung der Kupplung (8) oder des Gehäuses (23) des Getriebes (5) verbunden werden kann oder damit eine Einheit bildet und auf der das Verbindungszahnrad (27) gelagert ist, sowie eine Gehäuseplatte (23'), die an dem Gehäuse (23) des Getriebes angebracht werden kann oder damit eine Einheit bildet, und zwei Dichtringe (33, 35), von denen ein erster Dichtring (33) zwischen der Gehäuseplatte (23') oder dem Gehäuse (23) und dem Verbindungszahnrad (27) oder einer damit direkt verbundenen Verbindungshülse (27') angeordnet ist und ein zweiter Dichtring (35) zwischen dem Verbindungszahnrad (27) oder einer damit direkt verbundenen Verbindungshülse (27') und der Einsatzhülse (29) angeordnet ist.

2. Antrieb (1) nach Anspruch 1, **dadurch gekennzeichnet, dass** der Eingang durch eine Verbindungsplatte (31) gebildet wird, die mit einem Keilprofil (s₂) für die Kopplung mit dem ersten Drehkörper (15) des Planetensatzes (14) verbunden ist und mit dem ersten Kupplungsteil (8a) verbunden werden kann oder mit dem ersten Kupplungsteil eine Einheit bildet.

3. Antrieb (1) nach einem der Ansprüche 1 oder 2, **dadurch gekennzeichnet, dass** die Bremse (21) Betätigungsmittel umfasst, die mindestens drei Bremszylinder (45), in den Bremszylindern vorhandene Bremskolben (47) und zwischen den Bremszylindern angeordnete Bremsleitungen (49) umfassen, wobei die Betätigungsmittel eine geschlossene hydraulische Einheit (53) bilden, die in dem Gehäuse (23) des Getriebes (5) separat plaziert ist.

4. Antrieb (1) nach Anspruch 3, **dadurch gekennzeichnet, dass** die Bremszylinder (45) und Bremsleitungen (49) als Ganzes aus Kunststoff (55) ausgeführt sind.

## Revendications

1. Entraînement (1) pour un véhicule, comprenant une source motrice (3), une transmission (5) ayant un arbre d'entrée (7) et un arbre de sortie (9) et pourvue d'un boîtier (23), un embrayage (8) présent entre la source motrice et la transmission et ayant une première pièce d'embrayage (8a) reliée à la source motrice et une deuxième pièce d'embrayage (8b) reliée à l'arbre d'entrée de la transmission, et un module de transmission (13) ayant une entrée reliée à la première pièce d'embrayage (8a) et une sortie reliée à l'arbre de sortie (9) de la transmission, lequel module de transmission (13) comprend un frein (21), ainsi qu'une roue d'engrenage de liaison (27), et un train d'engrenage planétaire (14) ayant trois corps rotatifs dont un premier corps rotatif (15) est relié à l'entrée, un deuxième corps rotatif (17) est relié à la roue d'engrenage de liaison qui forme la sortie, et un troisième corps rotatif (19) est relié au frein, **caractérisé en ce que** le module de transmission (13) comprend une douille insert (29) pouvant être reliée à ou formant un tout avec un cylindre de commande (25) pour la commande de l'embrayage (8) ou du boîtier (23) de la transmission (5), et sur laquelle la roue d'engrenage de liaison (27) est fixée et équipée de roulements, ainsi qu'un couvercle de boîtier (23') pouvant être posé contre le boîtier (23) de la transmission ou formant un tout avec celui-ci, et deux joints annulaires (33, 35), dont un premier joint annulaire (33) se trouve entre le couvercle de boîtier (23') ou le boîtier (23) et la roue d'engrenage de liaison (27) ou une douille de connexion (27') directement reliée à celle-ci, et dont un deuxième joint annulaire (35) se trouve entre la roue d'engrenage de liaison (27) ou une douille de connexion (27') directement reliée à celle-ci et la douille insert (29).

2. Entraînement (1) selon la revendication 1, **caractérisé en ce que** l'entrée est formée d'un couvercle de raccordement (31) qui est pourvu d'une denture à cannelures (s₂) pour le couplage au premier corps rotatif (15) du train d'engrenage planétaire (14) et qui peut être relié à la première pièce d'embrayage ou qui forme un tout avec la première pièce d'embrayage (8a).

3. Entraînement (1) selon la revendication 1 ou 2, **caractérisé en ce que** le frein (21) comprend des moyens d'actionnement qui comprennent au moins trois cylindres de frein (45), pistons de frein (47) présents dans les cylindres de frein, et tuyaux de frein (49) présents entre les cylindres de frein, lesquels moyens d'actionnement forment une unité hydraulique (53) fermée qui est placée de façon isolée dans le boîtier (23) de la transmission (5).

4. Entraînement (1) selon la revendication 3, **caractérisé en ce que** les cylindres de frein (45) et tuyaux de frein (49) sont réalisés d'une pièce en plastique (55).
